(19) Europäisches Patentamt / European Patent Office / Office européen des brevets

(11) **EP 3 208 905 B1**

(12) **EUROPEAN PATENT SPECIFICATION**

(45) Date of publication and mention
of the grant of the patent:
**06.08.2025  Bulletin 2025/32**

(21) Application number: **17156968.4**

(22) Date of filing: **20.02.2017**

(51) International Patent Classification (IPC):
***H02H 3/33*** *(2006.01)*

(52) Cooperative Patent Classification (CPC):
**H02H 3/337**

(54) **A COMPENSATION DEVICE SUITABLE FOR COMPENSATING A CAPACITIVE LEAKAGE CURRENT OF A CIRCUIT OF A SINGLE-PHASE ELECTRICAL SYSTEM**

KOMPENSIERUNGSVORRICHTUNG FÜR KOMPENSIEREN VON KAPAZITIVEN LECKSTROMS EINER SCHALTKREIS VON EINPHASE ELEKTRISCHEN SYSTEM

UN DISPOSITIF DE COMPENSATION POUR COMPENSER LE COURANT CAPACTIVE DE FUITE DANS UN CIRCUIT D'UN SYSTÈME MONOPHASÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2016  IT UB20160957**

(43) Date of publication of application:
**23.08.2017  Bulletin 2017/34**

(73) Proprietor: **TEYPRA S.R.L.**
**45038 Polesella (RO) (IT)**

(72) Inventor: **ROSSIN, Paolo**
**I-45100 ROVIGO (IT)**

(74) Representative: **Susanetto, Carlo et al**
**Cantaluppi & Partners S.r.l.**
**Piazzetta Cappellato Pedrocchi, 18**
**35122 Padova (IT)**

(56) References cited:
**EP-A2- 2 372 858      DE-A1- 102014 109 978**
**FR-A1- 2 775 847      US-A1- 2014 210 411**

## Description

<u>Technical field</u>

The present invention relates to a compensation device suitable for compensating a capacitive leakage current of a circuit of a single-phase electrical system, to a circuit of a single-phase electrical system comprising such a device, and to a method for compensating a capacitive leakage current of such a circuit.

<u>Prior art</u>

The device according to the invention is particularly, although not exclusively, applicable to the technical field of the design and production of what are known as low voltage electrical systems, that is to say systems having a nominal voltage of less than 1000 V AC, such as private electrical systems in domestic or industrial environments. These systems typically comprise a plurality of electrical appliances that are supplied with alternating current from an electrical substation via a suitable line.

Under the current national regulations concerning the design of electrical systems, these systems must ensure the safety of persons and property and must operate correctly according to their specified use. For this purpose, electrical systems provide for the use of special safety devices, including what is known as a residual current device, designed to disconnect an electrical circuit of the system.

As is known, a residual current device is a device configured to cut off the flow of current in an electrical circuit of the system if the difference in current between the active conductors of the system is greater than or equal to a nominal tripping threshold (typically 30 mA for protection against direct contact), this difference in current corresponding to what is known as the leakage current towards earth of the system.

Factors contributing to the generation of the leakage current towards earth include an accidental earth contact of an active part of the system or of a live conducting body due to a fault, what are known as direct and indirect contacts, and permanent leakage towards earth of the system.

In the relevant technical field, "direct contact" is taken to mean the (accidental) contact of a person with an active part of the system, that is to say with a normally live part such as an active conductor, while "indirect contact" refers to the contact of a person with a conductive body which is normally insulated but has become live due to a fault. These contacts generate leakage currents towards earth of the resistive type, that is to say currents in phase with the system voltage.

On the other hand, permanent leakage currents towards earth of the system are practically constant currents created by the impedance, which is inevitably non-infinite, linking the conductors of the system to the earth node. In other words, such leakage is due to the very nature of the wiring and the aforementioned appliances, and is therefore unrelated to any fault in the system.

These permanent leakage currents have a resistive component, that is to say one in phase with the voltage applied to the system, although this component is negligible unless there is a serious loss of insulation, and a reactive component, particularly a capacitive component, created both by parasitic capacitances present between the phase wires and the earth of the system, and by noise filters which are installed in most electronic equipment at the present time, for reasons of electromagnetic compatibility. More specifically, in single-phase systems supplied with alternating current, electrical noise filters, called EMI filters, introduce capacitive leakage currents at mains frequency, usually with a value in the range from 0.5 to 2.5 mA.

The applicant has observed that the increasing use of electronic equipment in systems may cause the development of leakage currents towards earth with an overall value such that they cause untimely tripping of residual current devices, thus preventing the system from operating when there is no real fault in the system, in other words when there is no real situation of risk for a person.

To overcome this problem, there is a known way of dividing the electrical system into two or more parallel branches, so that the leakage towards earth of each branch is less than about a third of the nominal tripping threshold of the residual current device associated with it.

In the technical field to which the present invention relates, there is also a known way of producing special residual current devices designed to minimize the persistent problem of untimely tripping.

Examples of such circuit breakers are described in WO03/001641.

However, the applicant has noticed that the "reinforced immunity" circuit breakers of WO03/001641 prove to be more structurally and functionally complex than ordinary residual current devices, and therefore more expensive, since they have to provide special means for performing the aforesaid subtraction between the currents, for example by using calculation units configured to process special-purpose algorithms.

An example of a residual current protection device is described in the patent application FR2775847A1. In particular, this residual current protection device comprises a residual current device, including a circuit breaker element and a toroid in series for measuring a differential current, and an impedance two-terminal network connected to the phase and neutral conductors of an electrical line, upstream and downstream of the toroid respectively. The residual current device and the bipolar impedance are therefore found to be intrinsically connected to one another, forming in a substantially inseparable manner the residual current protection device of FR2775847A1. Additionally, the applicant has noticed that the impedance two-terminal network inevitably forms a bypass circuit which electrically connects the phase conductor to the neutral conductor, even with the circuit breaker element open. This condition causes the potential of the neutral conductor to rise to that of the phase conductor, which evidently gives rise to safety problems in the electrical line.

Furthermore, the applicant has noticed that, in order to provide an electrical system, already having simple residual current devices, with "reinforced immunity" circuit breakers or residual current protection devices as mentioned above, it would inevitably be necessary to replace the residual current devices already present in the system, thus increasing the servicing and maintenance costs of the system.

An example of method and circuit arrangement with means for a leakage current compensation in a photovoltaic system with multiple differential current sensors is disclosed in DE 10 2014 109978 A1.

Description of the invention

In the context of the present description and the claims, the following definitions have been adopted.

The expression "circuit of a single-phase electrical system" relates to a single-phase electrical system as a whole, or part of it, which is energized by a power supply device through a single-phase electrical line. The aforesaid circuit of a single-phase electrical system comprises a phase conductor and a neutral conductor.

The expression "differential current" relates to the difference between the current flowing in a phase conductor and that flowing in a neutral conductor of the circuit of a single-phase electrical system. This represents the current which is detected by a residual current device whose input is connected to a first and a second conductor of the single-phase electrical line, and whose output is connected to the phase and neutral conductors of the aforesaid circuit.

The expression "capacitive leakage current" relates to the total capacitive leakage current of the circuit of a single-phase electrical system formed by the sum of the leakage currents towards earth of the capacitive type generated by the phase and neutral conductors of the aforesaid circuit and by the loads present in it.

The problem underlying the present invention is that of providing a compensation device suitable for compensating a capacitive leakage current of a circuit of a single-phase electrical system, a circuit of a single-phase electrical system comprising such a device, and a method for compensating a capacitive leakage current of such a circuit structurally and functionally designed to overcome at least one drawback identified in the aforementioned prior art.

The applicant has also noticed that possible pulsed phenomena of atmospheric origin or arising from operation, such as excess voltages or, more generally, sudden variations of voltage or current, may create transitory leakage currents towards earth, which also cannot be related to faults of the system and/or situations of real danger for persons. Such a transient current, typically of the pulsed type, is also detected by the residual current device.

Furthermore, the applicant has noticed that the tolerances on the manufacture of a residual current device may give rise to tripping of the circuit breaker even at an root mean square (r.m.s.) value of the differential current equal to about ¾ of the nominal tripping threshold, or in the range from ½ of the nominal tripping threshold to the nominal threshold itself, as stated by the relevant standards.

The applicant has therefore realized that, typically, a permanent leakage current value greater than, or equal to, ¾ of the nominal tripping threshold of the residual current device could cause untimely tripping of the circuit breaker. The applicant has also realized that a reduction of the tripping margin of the residual current device, due to the aforesaid permanent leakage current, as explained more fully below, may easily cause the untimely tripping of the residual current device if transient currents, even if small, occur as a result of rapid variations in the power supply voltage (due to atmospheric events, for example).

The untimely tripping of a residual current device may also be caused by the voltage variation due to the action of resetting the circuit breaker.

The applicant has therefore realized that the permanent leakage current is one of the main causes of the undesired phenomenon of untimely tripping of the residual current device.

In the context of this problem, one object of the invention is to provide a compensation device which can limit, or preferably eliminate, the phenomenon of untimely tripping of residual current devices.

A further object of the invention is to ensure continuity of service of an electrical system if there are no faults in the system and/or if there is no real danger for its user.

A further object of the invention is to provide a compensation device which does not compromise or reduce the safety of the circuit of an electrical system to which it is connected.

This problem is overcome, and at least one of these objects is achieved, by means of a compensation device, a circuit of a single-phase electrical system comprising such a compensation device, and a method for compensating a capacitive leakage current of a circuit of a single-phase electrical system carried out in accordance with the respective independent claims appended to the present description.

Preferred characteristics of the invention are defined in the dependent claims.

Description of the drawings

The features and further advantages of the invention will be more apparent from the following detailed description of some preferred but non-exclusive examples of embodiment thereof, illustrated, for the purposes of guidance and without restrictive intent, with reference to the attached drawings, in which:

- Figure 1 is a schematic view of a circuit of an electrical system energized by a power supply device through a single-phase electrical as a prior art,
- Figure 2 is a schematic view of an electrical arrangement comprising a compensation device according to the invention,
- Figure 3 is a vectorial representation in the complex plane of a differential current detected by a residual current device connected to an electrical circuit not provided with a compensation device according to the invention,
- Figure 4 is a vectorial representation in the complex plane of the differential current of Figure 3 in the presence of a compensation current generated by a compensation device according to the invention,
- Figure 5 is a schematic view of a compensation device according to the invention connected to a circuit of an electrical system,
- Figures 6 and 7 are schematic views of two embodiments of a compensation device according to the invention connected to a circuit of an electrical system,
- Figure 8 is a schematic view of an AC/DC power supply for a compensation device according to the invention, and
- Figures 9 and 10 show, respectively, a path of a compensation current according to the invention and a path of a capacitive leakage current of a circuit according to the invention.

Detailed description of a number of embodiments of the invention

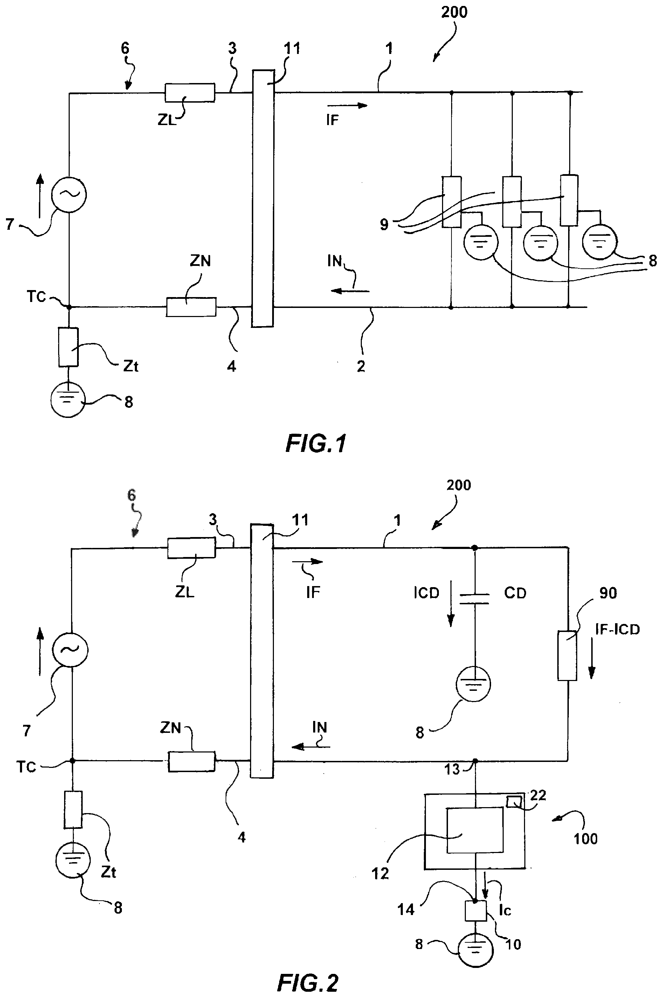

Figure 1 shows a circuit 200 of a single-phase electrical system energized by a power supply device 7 through a single-phase electrical line 6, in which $Z_L$ and $Z_N$ represent the line and neutral impedance of the single-phase electrical line 6.

With reference to Figure 2, the reference numeral 100 indicates the whole of a compensation device for a circuit 200 of a single-phase electrical system carried out according to the present invention. The circuit 200 may be a single-phase electrical circuit.

According to one aspect of the invention, the single-phase electrical system may be identical with a consumer electrical system of an electrical power system (preferably a low voltage system). With reference to Figures 1 and 2, the circuit 200 comprises a phase conductor 1, a neutral conductor 2 and, preferably, a protective conductor connected to earth (indicated by the reference numeral 8).

The phase and neutral conductors 1, 2 of the circuit 200 are connected, respectively, to a first conductor 3 and to a second conductor 4 (or corresponding branches) of a single-phase electrical line 6, the second conductor 4 of the single-phase electrical line 6 being connected to earth, preferably in an electrical substation.

Preferably, a power supply device 7 is connected to the single-phase electrical line 6 to energize it.

According to one aspect of the invention, the second conductor 4 of the single-phase electrical line 6 is connected to earth near, or at, the power supply device 7 (this connection is shown, by way of example, as the node Tc in Figure 1).

With reference to Figure 1, $Z_t$ shows the impedance between the earth of the single-phase electrical system and the node Tc, that is to say between the node Tc and the earth 8. Preferably, the impedance $Z_t$ is essentially negligible.

According to one aspect of the invention, the circuit 200 and single-phase electrical line 6 are of the low voltage type; that is to say, they are supplied with alternating current at a nominal voltage of not more than 1000 V by the power supply device 7. Preferably, the power supply device 7 applies a predetermined voltage to the circuit 200, preferably a nominal voltage of 230 V AC at 50 Hz, thus establishing a voltage between the phase conductor 1 and the neutral conductor 2.

Preferably, the power supply device 7 is an electrical substation, particularly an electrical transformer substation designed to transform the voltage supplied from an intermediate voltage network to the supply levels of low voltage lines.

More preferably, the power supply device 7 is provided with a corresponding earthing system through which the second conductor 4 of the single-phase electrical line 6 is earthed.

In a more general embodiment of the invention, the power supply device 7 is a multiphase, particularly a three-phase, generator or transformer, in which the single-phase electrical line 6 is connected electrically to a phase terminal and to a neutral terminal (star centre) of the power supply device 7 through the first and second conductor 3, 4 respectively.

In a preferred embodiment of the invention, the circuit 200 forms, with the single-phase electrical line 6 and with the power supply device 7, an electrical system of the TT ("Terra-Terra", Earth-Earth) or TN ("Terra-Neutro", Earth-Neutral) type. In particular, the TT or TN electrical system is a single-phase system.

One or more loads 9 (represented in Figures 2 - 7 by the equivalent load 90) are connected to the phase conductor 1 and the neutral conductor 2 of the circuit 200 in such a way that they can be energized with alternating current (at 230 V, 50 Hz for example) from the single-phase electrical line 6 through the conductors 1, 2.

In particular, the earths of the loads 9 are electrically connected to earth 8, preferably via the protective conductor.

By way of example, the loads 9 may be electrical equipment or machines connected to the circuit 200 and intended to perform a specific function, particularly domestic appliances such as refrigerators, televisions and cookers.

The phase and neutral conductors 1, 2 of the circuit 200 and the loads 9 connected to them have respective parasitic capacitances through which they generate capacitive leakage currents towards earth, the sum of which forms a capacitive leakage current $I_{CD}$ of the circuit 200. In other words, leakage currents towards earth of the capacitive type are established through the aforesaid parasitic capacitances.

In the context of the present invention, the equivalent parasitic capacitance of the circuit 200 is indicated by the symbol $C_D$, and, for the sake of simplicity, is defined as the sum of the parasitic capacitances present between the phase conductor 1 and the earth 8 with the parasitic capacitances of the loads 9. The capacitance between the neutral conductor 2 and the earth 8 is, in fact, essentially irrelevant, since the current flowing through it is negligible (the voltage at the ends of this capacitance is essentially zero).

Regarding the capacitive leakage current $I_{CD}$, this comprises the permanent capacitive leakage currents towards earth (which cannot be related to faults of the electrical system and/or situations of real danger for a person) and the transient capacitive leakage currents towards earth, generally pulsed, which may be related to abrupt variations in the voltage applied to the circuit 200.

In the context of the present invention, the sum of the permanent capacitive leakage currents of the circuit 200 is defined as follows: permanent capacitive leakage current $I_{CP}$. casein particular, the constant capacitive leakage current $I_{CP}$ is an alternating current, particularly a sinusoidal current, having a frequency $f_{CP}$ equal to that the power supply of the circuit 200 (50 Hz, for example). In particular, the permanent capacitive leakage current $I_{CP}$ is offset by 90° in advance of the voltage applied to the circuit 200.

The capacitive leakage current $I_{CD}$ may therefore be defined as an alternating current resulting from the sum of the permanent capacitive leakage current $I_{CP}$ with any transient (pulsed) capacitive leakage currents, that is to say:

$$I_{CD} = I_{CP} + I_{CT,}$$

where $I_{CT}$ represents the sum of the transient capacitive leakage currents.

According to one aspect of the invention, the capacitive leakage current $I_{CD}$ flows alternately from and towards earth (through the aforesaid parasitic capacitances). According to a further aspect of the invention, the capacitive leakage current $I_{CD}$ has a fundamental period $T_{CD}$ equal to the period ($1/f_{CP}$) of the constant capacitive leakage current $I_{CP}$.

Preferably, the circuit 200 comprises a residual current device 11 whose input is connected to the first and second conductor 3, 4 of the single-phase electrical line 6 and whose output is connected to the phase conductor 1 and neutral conductor 2 of the circuit 200.

According to one aspect of the invention, the residual current device 11 may be an ordinary safety device capable of cutting off the flow of electrical power in the circuit 200 in case of an earth fault. Consequently, no detailed description of the residual current device 11 will be given.

According to one aspect of the invention, the residual current device 11 is configured to detect differential current I∆.

Preferably, the differential current I∆ represents the difference between the phase current $I_F$ flowing in the phase conductor 1 and the neutral current $I_N$ flowing in the neutral conductor 2 of the circuit 200. In particular, the phase current $I_F$ is the electric current leaving the residual current device 11 and flowing in the phase conductor 1, while the neutral current $I_N$ is the electric current entering the residual current device 11 and flowing in the neutral conductor 2 as shown in the circuit diagram of the figures attached to the description.

In an ideal condition, that is to say in the absence of leakage currents towards earth in the circuit 200, the differential current I∆ detected by the circuit breaker 11 would be equal to zero. Differently, the presence of leakage currents towards earth in the circuit 200 creates an imbalance between the phase current $I_F$ and the neutral current $I_N$, creating a differential current I∆ which is other than zero.

If the root mean square value of the differential current I∆ is greater than or equal to a predetermined threshold of the residual current device 11, the latter is tripped, cutting off the flow of current in the circuit 200 and disconnecting both the phase conductor 1 and the neutral conductor 2. This predetermined threshold is defined as the nominal tripping threshold $I∆_n$ (typically 30 mA for protection from direct contact).

As mentioned above, the manufacturing tolerances on the residual current device 11 may, in reality, cause the circuit breaker 11 to be tripped at root mean square values of the differential current I$\Delta$ equal to an actual tripping threshold I$\Delta_R$, which is below the nominal tripping threshold I$\Delta_n$. In particular, the actual tripping threshold I$\Delta_R$ of a residual current device 11 may have a value in the range from ½ I$\Delta_n$ to I$\Delta_n$, typically equal to ¾ I$\Delta_n$.

If there are no faults and/or no situation of real danger for a person, the neutral current I$_N$ is reduced by a value equal to the capacitive leakage current I$_{CD}$. This results in an imbalance between the phase current I$_F$ and the neutral current I$_N$, creating a differential current I$\Delta$ which is equal to I$_{CD}$. In particular, in a normal operating condition of the circuit 200, in which there are no excess voltages or other transient phenomena, the differential current I$\Delta$ detected by the residual current device 11 will not be zero, but will be equal to the permanent capacitive leakage current I$_{CP}$; that is to say:

$$I\Delta = I_F - I_N = I_F - (I_F - I_{CP}) = I_{CP} \neq 0, \text{ where } I_{CP} = I_{CD}.$$

The difference between the actual tripping threshold I$\Delta_R$ and the permanent capacitive leakage current I$_{CP}$ will be defined as the tripping margin M of the residual current device 11.

In other words, the tripping margin M may be equal to the value of an leakage current towards earth which is different from the permanent capacitive leakage current I$_{CP}$ and which, when added to the latter, will be capable of causing the residual current device 11 to trip.

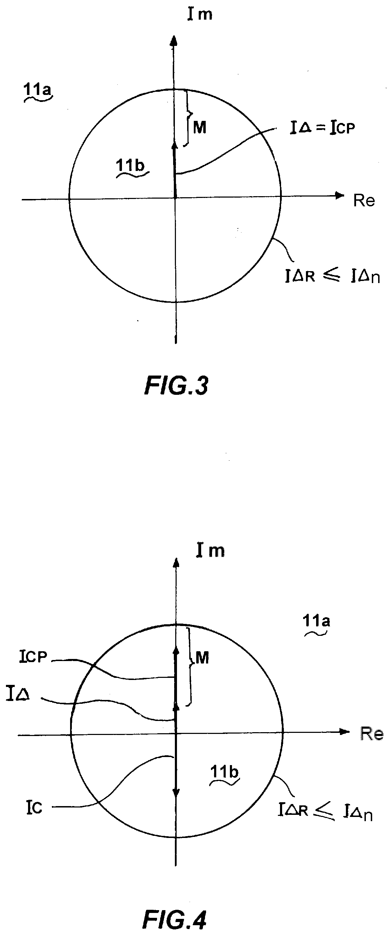

Figure 3 shows a vectorial representation of the differential current I$\Delta$ in the complex plane in a condition in which there are no faults and/or no situation of real danger for a person, and therefore the differential current I$\Delta$ is equal to the constant capacitive leakage current I$_{CP}$. Figure 3 also shows the actual tripping threshold I$\Delta_R$ in the form of a circumference defining an assured tripping region 11a of the residual current device 11 and a non-tripping region 11b inside the circumference.

It is evident from Figure 3 that an r.m.s. value of the permanent capacitive leakage current I$_{CP}$ that is greater than, or equal to, the actual tripping threshold I$\Delta_R$ causes the untimely tripping of the residual current device 11.

It should also be noted that an increase in the r.m.s. value of the permanent capacitive leakage current I$_{CP}$ corresponds to a reduction of the tripping margin M of the residual current device 11, a fact which probably leads to an increase in the probability of untimely tripping of the residual current device 11.

In the preferred embodiment of the invention, the compensation device 100 comprises a compensation circuit 12 provided with a first and a second terminal 13, 14. The compensation circuit 12 is designed to be connected to the neutral conductor 2 via the first terminal 13 and to an earthing system 10 via the second terminal 14. Thus the neutral conductor 2 may be electrically connected to the aforesaid earthing system 10 through the compensation circuit 12.

The circuit 200, or the single-phase electrical system, may comprise the earthing system 10. Preferably, the earthing system 10 is separate from an earthing system of the power supply device 7.

Alternatively, the earthing system 10 is provided in the power supply device 7.

According to one aspect of the invention, the compensation device 100 is connected to the circuit 200 downstream of the residual current device 11 with respect to the single-phase electrical line 6. Preferably, the compensation device 100 is connected to the circuit 200 upstream of the loads 9 with respect to the single-phase electrical line 6. With reference to Figure 2, the first terminal 13 is connected to the neutral conductor 2 downstream of the residual current device 11 and preferably upstream of the loads 9 with respect to the single-phase electrical line 6.

The compensation circuit 12 is configured to generate a compensation current I$_C$ in such a way that it flows alternately from the neutral conductor 2 to earth and vice versa through the earthing system 10 when the first and second terminals 13, 14 are connected, respectively, to the neutral conductor 2 and to the earthing system 10, the compensation current I$_C$ having direction which is opposite that of the capacitive leakage current I$_{CD}$.

In particular, the compensation current I$_C$ flows from the neutral conductor 2 towards earth and vice versa through the compensation circuit 12.

In other words, the compensation circuit 12 is configured in such a way that the compensation current I$_C$ flows from the neutral conductor 2 towards earth when the capacitive leakage current I$_{CD}$ flows from earth towards the phase conductor 1, and in such a way that the compensation current I$_C$ flows from earth towards the neutral conductor 2 when the capacitive leakage current I$_{CD}$ flows from the phase conductor 1 towards earth.

More preferably, the compensation current I$_C$ is in phase opposition to the capacitive leakage current I$_{CD}$. In particular, the compensation current I$_C$ is substantially reactive.

According to one aspect of the invention, the compensation device 100 produces a compensation current I$_C$ which, in a first step, flows from the compensation circuit 12 to the neutral conductor 2 of the circuit 200, through the first terminal 13, and returns through the earthing system 10 after passing through the second conductor 4 of the single-phase electrical line 6 and the earth.

Instead, in a second step, the compensation current I$_C$ flows from the compensation circuit 12 towards earth, through the second terminal 14 and the earthing system 10, and returns in the neutral conductor 2 of the circuit 200 after passing through the earth and the second conductor 4 of the single-phase electrical line 6.

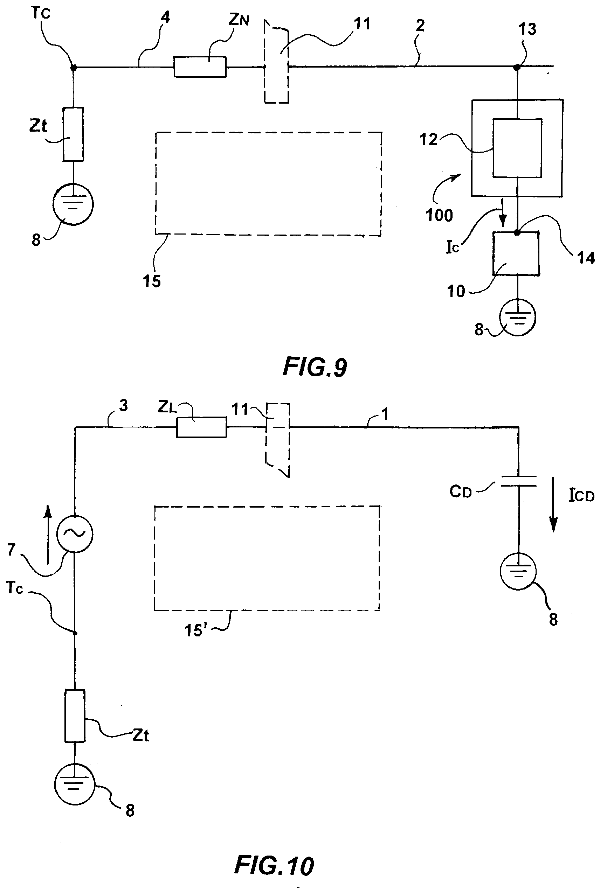

It should be noted that, by applying the principle of superposition of effects to the circuit diagram of Figure 2, we obtain a first and a second electrical meshes 15, 15', as represented in Figures 9 and 10, which show, respectively, the contribution of the compensation current $I_C$ and the contribution of the leakage current $I_{CD}$. The equivalence of the electrical meshes 15 and 15' is discussed below.

With reference to the figures, because of the presence of the compensation current $I_C$ we can rewrite the differential current $I\Delta$ detected by the residual current device 11 as follows:

$$I\Delta = I_F - I_N = I_F - [I_F - (I_{CD} + I_C)] = I_{CD} + I_C$$

In other words, according to one aspect of the invention, the differential current $I\Delta$ detected by the residual current device 11 is equal to the sum (particularly the vector sum) of the capacitive leakage current $I_{CD}$ and the compensation current $I_C$. According to one aspect of the invention, the compensation circuit 12 is configured to generate the compensation current $I_C$ in such a way that the sum of the compensation current $I_C$ and the capacitive leakage current $I_{CD}$ has a smaller value than that of the capacitive leakage current $I_{CD}$. Preferably, the intensity of the compensation current $I_C$ is such that the sum of the compensation current $I_C$ and the capacitive leakage current $I_{CD}$ has a smaller value than that of the capacitive leakage cur**rent** $I_{CD}$.

According to one aspect of the invention, the intensity of the sum of the compensation current $I_C$ and the capacitive leakage current $I_{CD}$ is smaller than the intensity of the capacitive leakage current $I_{CD}$.

Preferably, the compensation current $I_C$ is generated in such a way that the point value (and/or r.m.s. value) of the sum of the compensation current $I_C$ and the capacitive leakage current $I_{CD}$ is smaller than the point value (and/or r.m.s. value) of the capacitive leakage current $I_{CD}$.

Preferably, the compensation circuit 12 is configured to generate the compensation current $I_C$ in such a way that its intensity, particularly its point and/or r.m.s. value, is less than twice that of the capacitive leakage current $I_{CD}$.

In other words, according to one aspect of the invention, the intensity of the compensation current $I_C$ is such that the value, particularly the r.m.s. value, of the differential current $I\Delta$ detected by the residual current device 11 is smaller than the value, particularly the r.m.s. value, of the capacitive leakage current $I_{CD}$.

Because of these characteristics, the differential current $I\Delta$ detected by the residual current device 11, that is to say the sum of the currents $I_{CD}$ and $I_C$, has a (r.m.s.) value smaller than that of the capacitive leakage current $I_{CD}$, that is to say smaller compared with a condition in which no compensation is provided by the compensation current $I_C$ according to the invention, that is smaller compared with a circuit of an electrical system not equipped with the device 100.

Thus the possibility of untimely tripping of the residual current device 11 is reduced.

In one embodiment of the invention, the instantaneous value of the compensation current $I_C$ generated by the compensation circuit 12 is proportional to the value of the capacitive leakage current $I_{CD}$ at that instant. In this case, allowing for the fact that the direction of the compensation current $I_C$ is opposite that of the capacitive leakage current $I_{CD}$, the compensation current $I_C$ may be written as $-K*I_{CD}$, where $0<K<2$. Therefore the differential current $I\Delta$ detected by the residual current device 11 will have a value of $(1-K)*I_{CD}$, that is to say:

$$I\Delta = I_F - I_N = I_F - (I_F - I_{CD} - I_C) = I_{CD} + I_C = (1-K)*I_{CD}$$

For a compensation current $I_C$ having a suitable (r.m.s.) value, the (r.m.s.) value of the sum of the currents $I_{CD}$ and $I_C$, that is to say the (r.m.s.) value of $(1-K)*I_{CD}$, will therefore be smaller than the (r.m.s.) value defined by the capacitive leakage current $I_{CD}$ alone, thus allowing the r.m.s. value of the differential current $I\Delta$ detected by the residual current device 11 to be reduced.

Preferably, the instantaneous value of the compensation current $I_C$ is equal to that of the capacitive leakage current $I_{CD}$ at the same instant of time, so that the value of the differential current $I\Delta$ detected by the residual current device 11 is (essentially) made equal to zero.

In this case, the compensation device 100 faithfully reproduces the series defined by the power supply device 7 with the equivalent parasitic capacitance $C_D$ of the circuit 200 (assuming that $Z_N = Z_L$).

The first electrical mesh 15 of Figure 9 may therefore be considered equivalent to the second electrical mesh 15' of Figure 10. In other words, since the first and second meshes 15 and 15' are equivalent, the respective currents are essentially equal.

It should also be noted that the compensation current $I_C$ increases the tripping margin M of the residual current device 11, thus resolving the problem of untimely tripping of the residual current device 11.

The compensation device 100 also makes it possible to resolve the problem of untimely tripping of a residual current device 11 without increasing the tripping time of the circuit breaker, thus keeping the safety of the electrical system unchanged. Advantageously, the provision of a connection between the compensation device 100 and the circuit 200 downstream of the residual current device 11 prevents the formation of a bridge between the first conductor 3 of the single-phase electrical line 6 and the circuit 200 which would allow the electrical power from the power supply device 7 to avoid and bypass the residual current device 11, thus energizing the circuit 200 regardless of whether the circuit breaker was open or closed. Therefore the safety of the electrical system is not reduced.

In one embodiment of the invention, the direction of the compensation current $I_C$ is opposite that of the capacitive leakage current $I_{CD}$ for a substantial portion of the fundamental period $T_{CD}$ of the capacitive leakage current $I_{CD}$. Preferably, the aforesaid substantial portion of the fundamental period $T_{CD}$ is at least 90% of the latter. More preferably, the aforesaid substantial portion is at least 95% of the fundamental period $T_{CD}$.

In this case, although the compensation circuit 12 does not generate a capacitive leakage current $I_{CD}$ opposed to the capacitive leakage current $I_{CD}$ for each instant of time, it still provides sufficient compensation of the capacitive leakage current $I_{CD}$ to prevent the untimely tripping of the residual current device 11.

In particular, it should be noted that the reduction of the r.m.s. value of the differential current $I\Delta$ detected by the residual current device 11 becomes greater as the intensity, particularly the r.m.s. value, of the compensation current $I_C$ approaches the intensity, particularly the r.m.s. value, of the capacitive leakage current $I_{CD}$.

In this context, the compensation device 100 may provide input means 22 such as switches, selectors and/or software configurations, which an operator may use to carry out a procedure of calibrating the compensation current $I_C$, modifying its r.m.s. value.

In particular, the input means 22 are arranged to regulate the r.m.s. value of the compensation current $I_C$ in such a way that it is substantially equal to the r.m.s. value of the capacitive leakage current $I_{CD}$.

This calibration procedure includes a first step of measuring the r.m.s. value of the differential current $I\Delta$ detected by the residual current device 11, for example by means of a clamp-on ammeter suitable for measuring the leakage currents of an electrical system. The calibration procedure then provides for the generation of a compensation current $I_C$ having a zero value, by means of the compensation circuit 12.

A third step of the calibration procedure provides for the increase of the r.m.s. value of the compensation current $I_C$ generated by the compensation circuit 12, using the aforesaid input means 22, until the r.m.s. value of the differential current $I\Delta$ measured by the clamp-on ammeter reaches a minimum.

Alternatively, the input means 22 of the compensation device 100 may be used to set an r.m.s. value of the compensation current $I_C$ at 3/8 of the nominal tripping threshold $I\Delta_n$.

In particular, 3/8 $I\Delta_n$ is the value of the compensation current Ic which maximizes the tripping margin M for an unknown capacitive leakage current $I_{CD}$ which is smaller than 3/4 $I\Delta_n$. In many cases, this value is found to be sufficient to overcome the problem of untimely tripping of the residual current device 11.

With reference to Figure 4, it may be seen that, in the absence of transient capacitive leakage currents in the circuit 200, the compensation current $I_C$ still makes it possible to reduce the contribution made by the permanent capacitive leakage current $I_{CP}$ to the determination of the differential current $I\Delta$, thus limiting or entirely resolving the persistent problem of the untimely tripping of the residual current device 11.

In order to provide the functions described above, the compensation device 100 may have the following detailed structure.

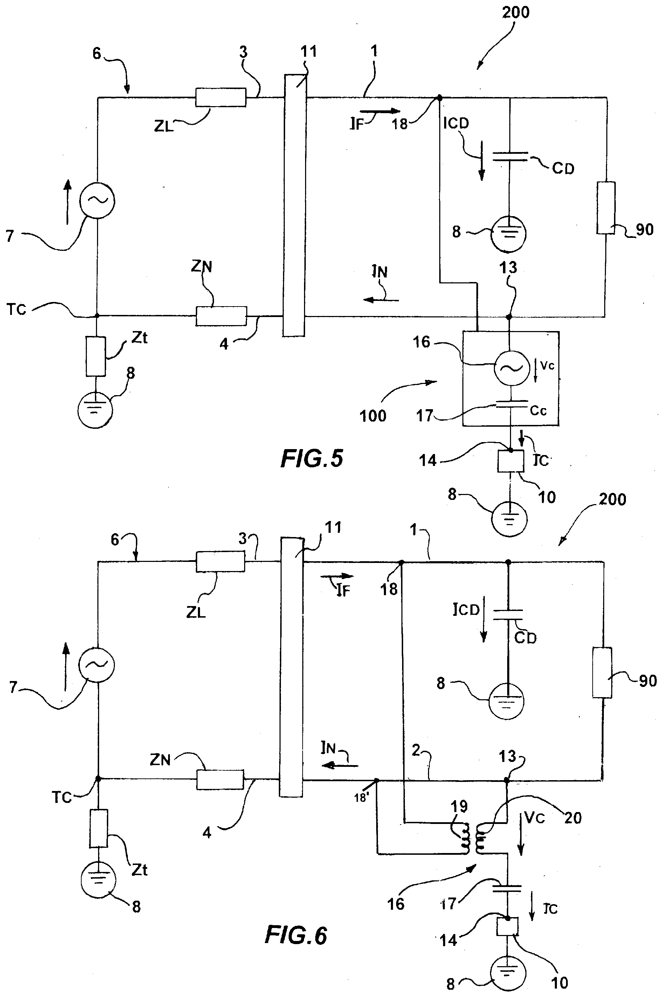

In a preferred embodiment of the invention, shown by way of example in Figure 5, the compensation circuit 12 comprises a third terminal 18 which can be connected to the phase conductor 1, and is configured to use the voltage present between the third terminal 18 and the first terminal 13 to generate the compensation current $I_C$. In the context of the present invention, the expression "to use a voltage" may also be interpreted as meaning "to measure, or detect, at least a part of this voltage".

Preferably, the first and third terminals 13, 18 are connected, respectively, to the neutral conductor 2 and the phase conductor 1, and the voltage present between the third terminal 18 and the first terminal 13 represents, and in particular is proportional to, the voltage between the phase conductor 1 and the neutral conductor 2 of the circuit 200.

Thus the compensation circuit 12 proves to be particularly suitable for generating a compensation current $I_C$ including a first component having a frequency equal to that of the nominal voltage applied to the circuit 200, and possibly a second component which is transient, being pulsed for example. Therefore the compensation current $I_C$ is capable of limiting, notably, not only the permanent capacitive leakage current $I_{CP}$, but also the transient capacitive leakage currents, greatly reducing or eliminating the problem of untimely tripping of the residual current device 11.

According to one aspect of the invention, the compensation device 100 may also comprise a changeover circuit arranged to switch the connections of the first and third terminals 13, 18 of the compensation circuit 12 if they are connected to the phase conductor 1 and neutral conductor 2, respectively, of the circuit 200. This ensures the correct connection of the terminals of the compensation device 100, that is to say the connection of the first terminal 13 to the neutral conductor 2 and the connection of the third terminal 18 to the phase conductor 1 of the circuit 200.

According to one aspect of the invention, the compensation circuit 12 may comprise a voltage generator 16 for generating a compensation voltage Vc between its ends.

Preferably, the compensation voltage Vc is generated between a first end of the voltage generator 16 connected (directly or indirectly) to the first terminal 13 and a second end of the voltage generator 16 connected (directly or indirectly) to the second terminal 14 of the compensation circuit 12.

In the context of the present invention, the compensation voltage Vc between the first and the second end of the voltage generator 16 is defined as the potential difference obtained by subtracting the electrical potential of the first end of the voltage generator 16 from the electrical potential of its second end.

According to one aspect of the invention, the compensation circuit 12 may comprise a capacitive two-terminal network 17, preferably connected in series with the voltage generator 16. The capacitive two-terminal network 17 is preferably formed by a capacitor.

Preferably, the capacitive two-terminal network 17 has a predefined and/or preset capacitance $C_C$. Preferably, the capacitance $C_C$ of the capacitive two-terminal network 17 is such as to create a compensation current $I_C$ having an r.m.s. value (essentially) equal to the r.m.s. value of the capacitive leakage current $I_{CD}$.

Preferably, the capacitance $C_C$ of the capacitive two-terminal network 17 is essentially equal to the equivalent parasitic capacitance of the circuit 200.

Preferably, the capacitive two-terminal network (17) is of the controllable capacitance type.

In other words, the capacitance $C_C$ of the capacitive two-terminal network 17 is a parameter that can be modified by an operator using adjustment means such as switches, selectors and/or software configurations of the compensation device 100. The input means 22 of the compensation device 100 may comprise the aforesaid adjustment means.

This enables an operator to modify the value of the capacitance $C_C$ of the capacitive two-terminal network 17 so as to vary the r.m.s. value of the compensation current $I_C$ generated by the compensation circuit 12 without modifying the compensation voltage Vc generated by the voltage generator 16.

With reference to Figure 5, the voltage generator 16 is connected via its first end to the first terminal 13, and via its second end to a first end of the capacitive two-terminal network 17. The capacitive two-terminal network 17 is connected via its second end to the second terminal 14.

In an alternative embodiment of the invention, the capacitive two-terminal network 17 may be connected via its first end to the first terminal 13, and via its second end to the first end of the voltage generator 16, the latter being connected via its second end to the second terminal 14.

Preferably, the voltage generator 16 is configured to generate the compensation voltage Vc in such a way that it is substantially proportional, but of opposite sign, to the voltage between the phase conductor 1 and the neutral conductor 2 of the circuit 200, in order to cause the compensation current $I_C$ to flow through the capacitive two-terminal network 17.

Preferably, the voltage generator 16 is a dependent voltage generator which generates the compensation voltage Vc on the basis of the voltage present between the phase conductor 1 and the neutral conductor 2 of the circuit 200.

Preferably, the absolute value of the ratio between the compensation voltage Vc and the voltage between the phase conductor 1 and the neutral conductor 2 is equal to 1. Preferably, the compensation voltage Vc is of opposite sign to the voltage between the phase conductor 1 and the neutral conductor 2.

In other words, a positive value of the voltage present between the phase conductor 1 and the neutral conductor 2 at a given instant of time corresponds to a negative value of the compensation voltage Vc, and vice versa.

In one embodiment of the invention, the compensation voltage Vc is opposed to the voltage between the phase conductor 1 and the neutral conductor 2 for at least 90% of the period of the latter voltage.

In a preferred embodiment of the invention, the amplitude and frequency of the compensation voltage Vc are the same as the (nominal) voltage applied between the phase conductor 1 and the neutral conductor 2 of the circuit 200.

Preferably, the values of the compensation voltage Vc have the same variation in time, but of opposite sign, as the voltage present between the phase conductor 1 and the neutral conductor 2, thus also replicating any excess voltages or other transient phenomena that may affect the circuit 200.

In other words, the voltage generator 16 may be configured to generate a compensation voltage Vc in such a way that it is substantially proportional to the voltage between the third terminal 18 and the first terminal 13, in order to cause the compensation current $I_C$ to flow through the capacitive two-terminal network 17. The voltage generator 16 may be provided with the third terminal 18 so as to generate the compensation voltage Vc on the basis of the voltage present between the phase conductor 1 and the neutral conductor 2 of the circuit 200, that is on the basis of the voltage between the third terminal 18 and the first terminal 13.

In a further embodiment of the invention, the compensation circuit 12 comprises, in addition to the third terminal 18, a fourth terminal that can be connected to the protective conductor of the circuit 200. In this case, the compensation circuit 12 is configured to use the voltage present between the third terminal 18 and the fourth terminal to generate the compensation current $I_C$.

Preferably, the third terminal 18 and the fourth terminal are connected, respectively, to the phase conductor 1 and to the protective conductor, and the voltage present between these terminals represents, and in particular is proportional to, the voltage between the phase conductor 1 and the protective conductor of the circuit 200.

In this embodiment, the voltage generator 16 is preferably configured to generate the compensation voltage Vc in such a way that it is substantially proportional, but of opposite sign, to the voltage between the phase conductor 1 and the protective conductor, in order to cause the compensation current $I_C$ to flow through the capacitive two-terminal network 17.

Preferably, the absolute value of the ratio between the compensation voltage Vc and the voltage between the phase conductor 1 and the protective conductor is equal to 1.

Figure 6 shows a preferred embodiment of the invention.

In this embodiment, the voltage generator 16 is formed by a transformer whose primary winding 19 is connected via its first end to the third terminal 18 and via its second end to the neutral conductor 2 of the circuit 200. In particular, the second end of the primary winding 19 is connected to the neutral conductor 2 via a terminal 18' of the compensation circuit 12 which is separate from the first terminal 13.

The secondary winding 20 of the aforesaid transformer is connected via its first end to the first terminal 13, and via its second end to the first end of the capacitive two-terminal network 17.

Preferably, the transformer is a 1:1 transformer, and more preferably it has a wide-band frequency response.

Advantageously, the embodiment of the invention shown in Figure 6 is not provided with active components, and therefore no special power supplies are required to energize the device 100.

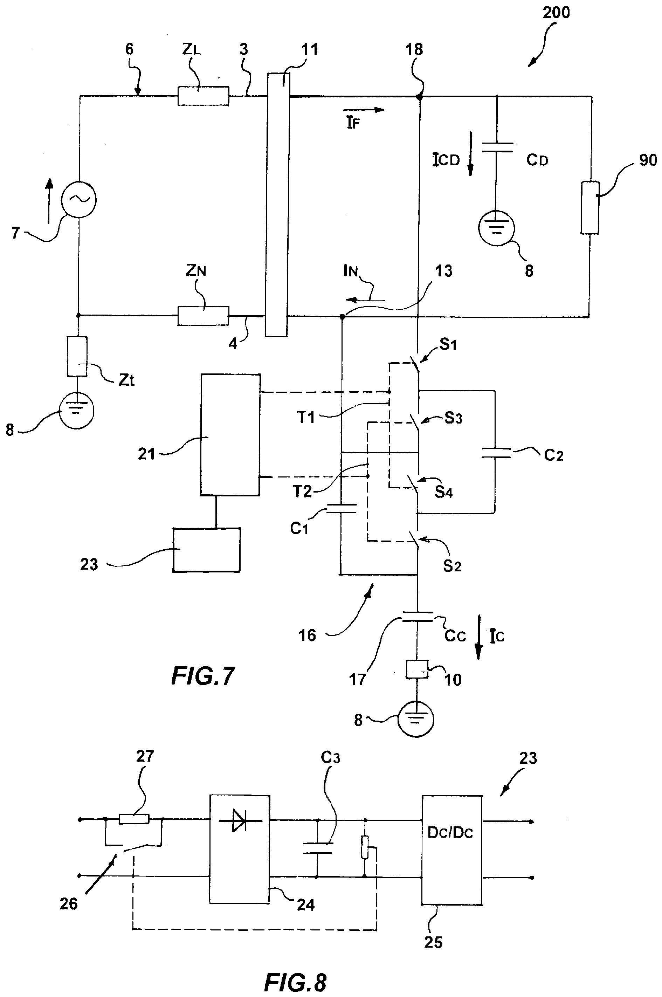

Figure 7 shows a further embodiment of the invention.

In this embodiment, the voltage generator 16 is formed by a four-quadrant inverting AC/AC converter. In particular, the voltage generator 16 is a switched-capacitor voltage inverter.

The voltage generator 16 comprises a first capacitor C1 whose first end is connected to the first terminal 13 of the compensation circuit 12 and whose second end is connected to the first end of the capacitive two-terminal network 17. The voltage generator 16 also comprises a second capacitor C2 whose first end is connected to the third terminal 18 through a first switch S1 and whose second end is connected to the capacitive two-terminal network 17 through a second switch S2.

The first end of the first capacitor C1 is also connected to the first end of the second capacitor C2 through a third switch S3 and to the second end of the second capacitor C2 through a fourth switch S4. The second end of the first capacitor C1 is also connected to the second end of the second capacitor C2 through the second switch S2.

The device 100 further comprises a control unit 21, such as a microcontroller, configured to control the actuation of the switches S1 - S4 which are alternately opened and closed at a predetermined frequency $f_S$. Preferably, the actuation frequency $f_S$ of the switches S1 - S4 is within the range from 20 kHz to 200 kHz.

Preferably, the actuation sequence of the switches S1 - S4 provides for the cyclic alternation of a first and a second period T1, T2, both having a duration of $1/(2f_S)$.

In the first period T1, switches S1 and S4 are closed and switches S2 and S3 are open, so that the first capacitor C1 is charged at the voltage present between the phase conductor 1 and the neutral conductor 2 of the circuit 200. In the second period T2, switches S1 and S4 are open and switches S2 and S3 are closed, so that the first capacitor C1 is electrically connected to the second capacitor C2, thereby transferring to the latter at least part of the charge accumulated in the first period T1.

Thus, at a sufficiently high value of the frequency $f_S$ (typically 20kHz), a compensation voltage Vc is generated between the first and second ends of the second capacitor C2, this voltage being opposed, and in particular being in phase opposition, to that present between the phase conductor 1 and the neutral conductor 2, thereby causing the alternating flow of the compensation current $I_C$ from and towards earth through the capacitive two-terminal network 17.

This embodiment of the invention advantageously enables a compensation circuit 12 to be constructed with smaller dimensions, resulting in a less bulky compensation device 100.

Furthermore, the compensation device 100 of Figure 7 is found to be particularly suitable for generating a compensation current $I_C$ in perfect phase opposition to the permanent capacitive leakage current $I_{CP}$, and also has a sufficiently wide response band to provide correct compensation of transient capacitive leakage currents, particularly those of a pulsed type.

To prevent the action of resetting a residual current device 11 from causing untimely tripping of the circuit breaker, the compensation device 100 may comprise a rapid AC/DC power supply 23 for generating a DC output voltage capable of energizing the control unit 21, in which the settling time of the aforesaid output voltage is less than ten milliseconds, or more preferably less than five milliseconds.

Figure 8 shows an exemplary embodiment of the rapid AC/DC power supply 23. The rapid AC/DC power supply 23 comprises a rectifier device 24 whose output is connected to a DC/DC converter 25. A capacitor C3 is connected to the output line of the rectifier device 24 upstream of the DC/DC converter. The rapid AC/DC power supply is also provided with a switch device 26 such as a relay, positioned so as to short-circuit the impedance 27 in series with the input of the rapid AC/DC power supply 23 when the switch device 26 is closed.

The impedance 27 in series with the input may be used to limit the current drawn by the rapid AC/DC power supply 23 from an electrical network when its input is connected to the latter.

The actuation of the switch device 26 is controlled on the basis of the voltage present at the ends of the capacitor C3.

The switch device 26 is normally closed when the rapid AC/DC power supply 23 is not connected to an electrical network, or is not energized by such an electrical network, thus establishing a low impedance at the input of the rectifier device 24.

The rapid AC/DC power supply may also be provided with a protection system (PTC) capable of opening the electrical circuit of the power supply 23 if the switch device 26 does not operate correctly or is not actuated within the specified time interval.

When the rapid AC/DC power supply 23 is energized by an electrical network and the switch device 26 is closed, the capacitor C3 is charged at the output voltage of the rectifier device 24 in a relatively short time (less than a millisecond), thus ensuring the rapid activation of the control unit 21 and consequently the rapid activation of the compensation device 100 connected downstream of the rapid AC/DC power supply 23.

As soon as the voltage at the ends of the capacitor C3 reaches a predetermined value, the switch device 26 is opened, connecting the impedance 27 in series with the upstream input of the rectifier device 24.

Thus the invention resolves the problem which was raised, while providing a number of advantages. In particular, the compensation device according to the invention may be used to resolve the problem of the untimely tripping of the residual current devices connected to a circuit of a single-phase electrical system. Furthermore, the device according to the invention is found to be particularly advantageous because it may be used as a complementary device to a residual current device which is already installed in an electrical system, without necessarily requiring the replacement of the residual current device. Moreover, the device according to the invention does not detract from the safety of an electric circuit to which it is connected, in respect of the interruption of the electric current flowing in the circuit in case of an earth fault.

**Claims**

1. A compensation device suitable for compensating a capacitive leakage current of a circuit of a single-phase electrical system, the circuit (200) comprising:

   • a phase conductor (1) and a neutral conductor (2) connected, respectively, to a first conductor (3) and to a second conductor (4) of a single-phase electrical line (6), the second conductor (4) of the single-phase electrical line (6) being connected to earth, and
   • one or more loads (9) which can be energized with alternating current from the single-phase electrical line (6) via the phase and neutral conductors (1, 2), the phase and neutral conductors (1, 2) and the loads (9) able to generate a capacitive leakage current ($I_{CD}$) towards earth,
   the compensation device (100) comprising a compensation circuit (12) provided with a first and a second terminal (13,14) and being **characterized in that** the compensation circuit (12) is:

   • arranged to be connected to the neutral conductor (2) via the first terminal (13) and to an earthing system (10) via the second terminal (14), and
   • configured to generate a compensation current ($I_C$) in such a way that it flows alternately from the neutral conductor (2) to earth and vice versa through the earthing system (10) when the first and second terminals (13, 14) are connected, respectively, to the neutral conductor (2) and to the earthing system (10), the compensation current ($I_C$) having direction which is opposite that of the capacitive leakage current ($I_{CD}$) and intensity such that the sum of the compensation current ($I_C$) and the capacitive leakage current ($I_{CD}$) has a smaller value than the value of the capacitive leakage current ($I_{CD}$),

   wherein the circuit (200) comprises a residual current device (11) whose input is connected to the single-phase electrical line (6) and whose output is connected to the phase and neutral conductors (1, 2), the compensation device (100) being connected to the circuit (200) downstream of the residual current device (11) with respect to the single-phase electrical line (6).

2. A compensation device according to any one of the preceding claims, wherein the direction of the compensation current ($I_C$) is opposed to that of the capacitive leakage current ($I_{CD}$) for a substantial portion of a fundamental period ($T_{CD}$) of the capacitive leakage current ($I_{CD}$).

3. A compensation device according to any one of the preceding claims, wherein the compensation device (100) comprises input means (22) arranged to regulate the root mean square value of the compensation current ($I_C$) in such a way that it is substantially equal to the root mean square value of the capacitive leakage current ($I_{CD}$).

4. A compensation device according to any one of the preceding claims, wherein the compensation circuit (12) comprises a third terminal (18) which can be connected to the phase conductor (1), the compensation circuit (12) being configured to use the voltage present between the third terminal (18) and the first terminal (13) to generate the compensation current ($I_C$).

5. A compensation device according to any one of the preceding claims, wherein the compensation circuit (12) comprises a third terminal (18) which can be connected to the phase conductor (1) and a fourth terminal which can be connected to a protective conductor of the circuit (200), the compensation circuit (12) being configured to use the voltage present between the third terminal (18) and the fourth terminal to generate the compensation current (Ic).

6. A compensation device according to Claim 4 or 5, wherein the compensation circuit (12) comprises:

  • a voltage generator (16) for generating a compensation voltage (Vc) between its ends, and
  • a capacitive two-terminal network (17) connected in series to the voltage generator (16),

the voltage generator (16) being configured to generate the compensation voltage (Vc) in such a way that it is substantially proportional, but of opposite sign, to the voltage between the phase conductor (1) and the neutral conductor (2) and/or between the phase conductor (1) and the protective conductor, in order to cause the compensation current ($I_C$) to flow through the capacitive two-terminal network (17).

7. A compensation device according to Claim 6, wherein the capacitive two-terminal network (17) is of the controllable capacitance type.

8. A compensation device according to Claim 6 or 7, wherein the capacitive two-terminal network (17) has a capacitance (Cc) substantially equal to the equivalent parasitic capacitance of the circuit (200).

9. A compensation device according to any one of Claims 6 to 8, wherein the voltage generator (16) is a transformer, preferably having a wide-band frequency response, whose primary winding (19) is connected by its first end to the third terminal (18) and by its second end to the neutral conductor (2), and whose secondary winding (20) is connected by its first end to the first terminal (13) and by its second end to a first end of the capacitive two-terminal network (17), a second end of the capacitive two-terminal network (17) being connected to the second terminal (14) of the compensation circuit (12).

10. A compensation device according to any one of Claims 6 to 8, wherein the voltage generator (16) comprises:

  • a first capacitor (C1) whose first end is connected to the first terminal (13) of the compensation circuit (12) and whose second end is connected to a first end of the capacitive two-terminal network (17), a second end of the capacitive two-terminal network (17) being connected to the second terminal (14) of the compensation circuit (12), and
  • a second capacitor (C2) whose first end is connected to the third terminal (18) of the compensation circuit (12) through a first switch (S1) and whose second end is connected to the capacitive two-terminal network (17) through a second switch (S2),

the first end of the first capacitor (C1) being connected to the first end of the second capacitor (C2) through a third switch (S3) and to the second end of the second capacitor (C2) through a fourth switch (S4), and the second end of the first capacitor (C1) being connected to the second end of the second capacitor (C2) through the second switch (S2), and wherein the compensation device (100) comprises a control unit (21) configured to actuate the switches (S1-S4) so as to alternate a first period (T1), in which the switches (S1) and (S4) are closed and the switches (S2) and (S3) are open, with a second period (T2), in which the switches (S1) and (S4) are open and the switches (S2) and (S3) are closed.

11. A compensation device according to Claim 10, wherein the compensation device (100) comprises a rapid AC/DC power supply (23) for generating a direct current output voltage capable of energizing the control unit (21), wherein the output voltage settling time is less than five milliseconds.

12. A single-phase electrical system comprising:

  a circuit (200) which comprises:

    • a phase conductor (1) and a neutral conductor (2) connected, respectively, to a first conductor (3) and to a second conductor (4) of a single-phase electrical line (6), the second conductor (4) of the single-phase electrical line (6) being connected to earth,
• one or more loads (9) which can be energized with alternating current from the single-phase electrical line (6) via the phase and neutral conductors (2), the phase (1) and neutral (2) conductors and the loads (9) generating a capacitive leakage current ($I_{CD}$) towards earth, and
• a residual current device (11) whose input is connected to the single-phase electrical line (6) and whose output is connected to the phase and neutral conductors (1, 2),

and a compensation device (100) according to any one of the preceding claims, the compensation device (100) being connected electrically to the neutral conductor (2) and to an earthing system (10) via the first terminal (13) and the second terminal (14), respectively, wherein the compensation device (100) is connected to the circuit (200) downstream of the residual current device (11) with respect to the single-phase electrical line (6).

13. A method for compensating a capacitive leakage current of a circuit of a single-phase electrical system, the circuit (200) comprising:

• a phase conductor (1) and a neutral conductor (2) connected, respectively, to a first conductor (3) and to a second conductor (4) of a single-phase electrical line (6), the second conductor (4) of the single-phase electrical line (6) being connected to earth,
• one or more loads (9) which can be energized with alternating current from the single-phase electrical line (6) via the phase and neutral conductors (1, 2), the phase and neutral conductors (1, 2) and the loads (9) able to generate a capacitive leakage current ($I_{CD}$) towards earth, and
• a residual current device (11) whose input is connected to the single-phase electrical line (6) and whose output is connected to the phase and neutral conductors (1, 2),

the method comprising:

• connecting a first terminal (13) of a compensation device (100) to the neutral conductor (2) and connecting a second terminal (14) of the compensation device (100) to an earthing system (10), wherein the compensation device (100) is connected to the circuit (200) downstream of the residual current device (11) with respect to the single-phase electrical line (6),
• generating, by means of the compensation device (100), a compensation current ($I_C$) in such a way that it flows alternately from the neutral conductor (2) to earth and vice versa through the earthing system (10), the compensation current ($I_C$) having direction which is opposite that of the capacitive leakage current ($I_{CD}$) and intensity such that the sum of the compensation current ($I_C$) and the capacitive leakage current ($I_{CD}$) has a smaller value than the value of the capacitive leakage current ($I_{CD}$).


**Patentansprüche**

1. Kompensationsvorrichtung, die geeignet ist, einen kapazitiven Leckstrom einer Schaltung eines einphasigen elektrischen Systems zu kompensieren, wobei die Schaltung (200) umfasst:

- einen Phasenleiter (1) und einen Neutralleiter (2), die jeweils mit einem ersten Leiter (3) und mit einem zweiten Leiter (4) einer einphasigen elektrischen Leitung (6) verbunden sind, wobei der zweite Leiter (4) der einphasigen elektrischen Leitung (6) mit Masse verbunden ist, und
- eine oder mehrere Lasten (9), die mit Wechselstrom von der einphasigen elektrischen Leitung (6) über die Phasen- und Neutralleiter (1, 2) versorgt werden können, wobei die Phasen- und Neutralleiter (1, 2) und die Lasten (9) in der Lage sind, einen kapazitiven Leckstrom ($I_{cd}$) in Richtung Masse zu erzeugen,
wobei die Kompensationsvorrichtung (100) eine Kompensationsschaltung (12) umfasst, die mit einem ersten und einem zweiten Anschluss (13, 14) versehen ist und **dadurch gekennzeichnet ist, dass** die Kompensationsschaltung (12):

- angeordnet ist, um mit dem Neutralleiter (2) über den ersten Anschluss (13) und mit einem Erdungssystem (10) über den zweiten Anschluss (14) verbunden zu werden, und
- konfiguriert ist, um einen Kompensationsstrom ($I_c$) auf eine solche Weise zu erzeugen, dass er abwechselnd von dem Neutralleiter (2) zu Masse und umgekehrt durch das Erdungssystem (10) fließt, wenn der erste und der zweite Anschluss (13, 14) jeweils mit dem Neutralleiter (2) und mit dem Erdungssystem (10) verbunden sind, wobei der Kompensationsstrom ($I_c$) eine Richtung, die der des kapazitiven Leckstroms ($I_{CD}$)

entgegengesetzt ist, und eine solche Stärke aufweist, dass die Summe des Kompensationsstroms ($I_c$) und des kapazitiven Leckstroms ($I_{CD}$) einen kleineren Wert als der Wert des kapazitiven Leckstroms ($I_{CD}$) aufweist,

wobei die Schaltung (200) eine Reststromvorrichtung (11) umfasst, deren Eingang mit der einphasigen elektrischen Leitung (6) verbunden ist und deren Ausgang mit den Phasen- und Neutralleitern (1, 2) verbunden ist, wobei die Kompensationsvorrichtung (100) mit der Schaltung (200) stromabwärts der Reststromvorrichtung (11) in Bezug auf die einphasige elektrische Leitung (6) verbunden ist.

2. Kompensationsvorrichtung nach einem der vorhergehenden Ansprüche, wobei die Richtung des Kompensationsstroms ($I_c$) der des kapazitiven Leckstroms ($I_{CD}$) für einen wesentlichen Teil einer Grundperiode ($T_{CD}$) des kapazitiven Leckstroms ($I_{CD}$) entgegengesetzt ist.

3. Kompensationsvorrichtung nach einem der vorhergehenden Ansprüche, wobei die Kompensationsvorrichtung (100) ein Eingangsmittel (22) umfasst, das angeordnet ist, um den Effektivwert des Kompensationsstroms ($I_c$) auf eine solche Weise zu regeln, dass er im Wesentlichen gleich dem Effektivwert des kapazitiven Leckstroms ($I_{CD}$) ist.

4. Kompensationsvorrichtung nach einem der vorhergehenden Ansprüche, wobei die Kompensationsschaltung (12) einen dritten Anschluss (18) umfasst, der mit dem Phasenleiter (1) verbunden werden kann, wobei die Kompensationsschaltung (12) konfiguriert ist, um die zwischen dem dritten Anschluss (18) und dem ersten Anschluss (13) vorhandene Spannung zu verwenden, um den Kompensationsstrom ($I_c$) zu erzeugen.

5. Kompensationsvorrichtung nach einem der vorhergehenden Ansprüche, wobei die Kompensationsschaltung (12) einen dritten Anschluss (18), der mit dem Phasenleiter (1) verbunden werden kann, und einen vierten Anschluss, der mit einem Schutzleiter der Schaltung (200) verbunden werden kann, umfasst, wobei die Kompensationsschaltung (12) konfiguriert ist, um die zwischen dem dritten Anschluss (18) und dem vierten Anschluss vorhandene Spannung zu verwenden, um den Kompensationsstrom ($I_c$) zu erzeugen.

6. Kompensationsvorrichtung nach Anspruch 4 oder 5, wobei die Kompensationsschaltung (12) umfasst:

   - einen Spannungsgenerator (16) zum Erzeugen einer Kompensationsspannung ($V_c$) zwischen seinen Enden, und
   - ein kapazitives Zweipolnetzwerk (17), das mit dem Spannungsgenerator (16) in Reihe geschaltet ist,

wobei der Spannungsgenerator (16) konfiguriert ist, um die Kompensationsspannung ($V_c$) auf eine solche Weise zu erzeugen, dass sie im Wesentlichen proportional, aber mit entgegengesetztem Vorzeichen, zu der Spannung zwischen dem Phasenleiter (1) und dem Neutralleiter (2) und/oder zwischen dem Phasenleiter (1) und dem Schutzleiter ist, um zu bewirken, dass der Kompensationsstrom ($I_c$) durch das kapazitive Zweipolnetzwerk (17) fließt.

7. Kompensationsvorrichtung nach Anspruch 6, wobei das kapazitive Zweipolnetzwerk (17) vom Typ mit steuerbarer Kapazität ist.

8. Kompensationsvorrichtung nach Anspruch 6 oder 7, wobei das kapazitive Zweipolnetzwerk (17) eine Kapazität ($C_c$) aufweist, die im Wesentlichen gleich der äquivalenten parasitären Kapazität der Schaltung (200) ist.

9. Kompensationsvorrichtung nach einem der Ansprüche 6 bis 8, wobei der Spannungsgenerator (16) ein Transformator ist, der vorzugsweise einen Breitbandfrequenzgang aufweist, dessen Primärwicklung (19) mit seinem ersten Ende mit dem dritten Anschluss (18) und mit seinem zweiten Ende mit dem Neutralleiter (2) verbunden ist, und dessen Sekundärwicklung (20) mit seinem ersten Ende mit dem ersten Anschluss (13) und mit seinem zweiten Ende mit einem ersten Ende des kapazitiven Zweipolnetzwerks (17) verbunden ist, wobei ein zweites Ende des kapazitiven Zweipolnetzwerks (17) mit dem zweiten Anschluss (14) der Kompensationsschaltung (12) verbunden ist.

10. Kompensationsvorrichtung nach einem der Ansprüche 6 bis 8, wobei der Spannungsgenerator (16) umfasst:

   - einen ersten Kondensator (C1), dessen erstes Ende mit dem ersten Anschluss (13) der Kompensationsschaltung (12) verbunden ist und dessen zweites Ende mit einem ersten Ende des kapazitiven Zweipolnetzwerks (17) verbunden ist, wobei ein zweites Ende des kapazitiven Zweipolnetzwerks (17) mit dem zweiten Anschluss (14) der Kompensationsschaltung (12) verbunden ist, und

- einen zweiten Kondensator (C2), dessen erstes Ende mit dem dritten Anschluss (18) der Kompensationsschaltung (12) über einen ersten Schalter (S1) verbunden ist und dessen zweites Ende mit dem kapazitiven Zweipolnetzwerk (17) über einen zweiten Schalter (S2) verbunden ist,

wobei das erste Ende des ersten Kondensators (C1) mit dem ersten Ende des zweiten Kondensators (C2) über einen dritten Schalter (S3) und mit dem zweiten Ende des zweiten Kondensators (C2) über einen vierten Schalter (S4) verbunden ist, und das zweite Ende des ersten Kondensators (C1) mit dem zweiten Ende des zweiten Kondensators (C2) über den zweiten Schalter (S2) verbunden ist, und wobei die Kompensationsvorrichtung (100) eine Steuereinheit (21) umfasst, die konfiguriert ist, um die Schalter (S1-S4) zu betätigen, um eine erste Periode (T1), in der die Schalter (S1) und (S4) geschlossen sind und die Schalter (S2) und (S3) offen sind, mit einer zweiten Periode (T2), in der die Schalter (S1) und (S4) offen sind und die Schalter (S2) und (S3) geschlossen sind, abzuwechseln.

11. Kompensationsvorrichtung nach Anspruch 10, wobei die Kompensationsvorrichtung (100) eine schnelle AC/DC-Stromversorgung (23) zum Erzeugen einer Gleichstromausgangsspannung umfasst, die in der Lage ist, die Steuereinheit (21) mit Strom zu versorgen, wobei die Ausgangsspannungseinschwingzeit weniger als fünf Millisekunden beträgt.

12. Einphasiges elektrisches System, umfassend: eine Schaltung (200), die umfasst:

- einen Phasenleiter (1) und einen Neutralleiter (2), die jeweils mit einem ersten Leiter (3) und mit einem zweiten Leiter (4) einer einphasigen elektrischen Leitung (6) verbunden sind, wobei der zweite Leiter (4) der einphasigen elektrischen Leitung (6) mit Masse verbunden ist,
- eine oder mehrere Lasten (9), die mit Wechselstrom von der einphasigen elektrischen Leitung (6) über die Phasen- und Neutralleiter (2) versorgt werden können, wobei die Phasen- (1) und Neutralleiter (2) und die Lasten (9) einen kapazitiven Leckstrom (Icd) in Richtung Masse erzeugen, und
- eine Reststromvorrichtung (11), deren Eingang mit der einphasigen elektrischen Leitung (6) verbunden ist und deren Ausgang mit den Phasen- und Neutralleitern (1, 2) verbunden ist,

und eine Kompensationsvorrichtung (100) nach einem der vorhergehenden Ansprüche, wobei die Kompensationsvorrichtung (100) elektrisch mit dem Neutralleiter (2) und mit einem Erdungssystem (10) über den ersten Anschluss (13) bzw. den zweiten Anschluss (14) verbunden ist, wobei die Kompensationsvorrichtung (100) mit der Schaltung (200) stromabwärts der Reststromvorrichtung (11) in Bezug auf die einphasige elektrische Leitung (6) verbunden ist.

13. Verfahren zum Kompensieren eines kapazitiven Leckstroms einer Schaltung eines einphasigen elektrischen Systems, wobei die Schaltung (200) umfasst:

- einen Phasenleiter (1) und einen Neutralleiter (2), die jeweils mit einem ersten Leiter (3) und mit einem zweiten Leiter (4) einer einphasigen elektrischen Leitung (6) verbunden sind, wobei der zweite Leiter (4) der einphasigen elektrischen Leitung (6) mit Masse verbunden ist,
- eine oder mehrere Lasten (9), die mit Wechselstrom von der einphasigen elektrischen Leitung (6) über die Phasen- und Neutralleiter (1, 2) versorgt werden können, wobei die Phasen- und Neutralleiter (1, 2) und die Lasten (9) in der Lage sind, einen kapazitiven Leckstrom (Icd) in Richtung Masse zu erzeugen, und
- eine Reststromvorrichtung (11), deren Eingang mit der einphasigen elektrischen Leitung (6) verbunden ist und deren Ausgang mit den Phasen- und Neutralleitern (1, 2) verbunden ist, wobei das Verfahren umfasst:
- Verbinden eines ersten Anschlusses (13) einer Kompensationsvorrichtung (100) mit dem Neutralleiter (2) und Verbinden eines zweiten Anschlusses (14) der Kompensationsvorrichtung (100) mit einem Erdungssystem (10), wobei die Kompensationsvorrichtung (100) mit der Schaltung (200) stromabwärts der Reststromvorrichtung (11) in Bezug auf die einphasige elektrische Leitung (6) verbunden ist,
- Erzeugen, mittels der Kompensationsvorrichtung (100), eines Kompensationsstroms ($I_C$) auf eine solche Weise, dass er abwechselnd von dem Neutralleiter (2) zu Masse und umgekehrt durch das Erdungssystem (10) fließt, wobei der Kompensationsstrom ($I_C$) eine Richtung, die der des kapazitiven Leckstroms ($I_{CD}$) entgegengesetzt ist, und eine solche Stärke aufweist, dass die Summe des Kompensationsstroms ($I_C$) und des kapazitiven Leckstroms ($I_{CD}$) einen kleineren Wert als der Wert des kapazitiven Leckstroms ($I_{CD}$) aufweist.

**Revendications**

1. Dispositif de compensation permettant de compenser un courant de fuite capacitif d'un circuit d'un système électrique monophasé, le circuit (200) comprenant :

- un conducteur de phase (1) et un conducteur neutre (2) connectés respectivement à un premier conducteur (3) et à un deuxième conducteur (4) d'une ligne électrique monophasée (6), le deuxième conducteur ( 4) de la ligne électrique monophasée (6) étant connecté à la terre, et
- une ou plusieurs charges (9) pouvant être alimentées en courant alternatif par la ligne électrique monophasée (6) via les conducteurs de phase et de neutre (1, 2), les conducteurs de phase et de neutre (1, 2) et les charges (9) pouvant générer un courant de fuite capacitif ($I_{CD}$) vers la terre, le dispositif de compensation (100) comprenant un circuit de compensation (12) muni d'une première et d'une deuxième borne (13,14) et **caractérisé en ce que** le circuit de compensation (12) est :

- disposé à être connecté au conducteur neutre (2) via la première borne (13) et à un système de mise à la terre (10) via la deuxième borne (14), et
- configuré pour générer un courant de compensation ($I_C$) de manière à ce qu'il circule alternativement du conducteur neutre (2) vers la terre et vice versa à travers le système de mise à la terre (10) lorsque la première et la deuxième borne (13, 14) sont connectées respectivement au conducteur neutre (2) et au système de mise à la terre (10), le courant de compensation ($I_C$) a une direction opposée à celle du courant de fuite capacitif ($I_{CD}$) et une intensité telle que la somme du courant de compensation ($I_C$) et du courant de fuite capacitif ($I_{CD}$) a une valeur inférieure à la valeur du courant de fuite capacitif ($I_{CD}$),

dans lequel le circuit (200) comprend un dispositif à courant résiduel (11) dont l'entrée est connectée à la ligne électrique monophasée (6) et dont la sortie est connectée aux conducteurs de phase et de neutre (1, 2), le dispositif de compensation (100) étant connecté au circuit (200) en aval du dispositif à courant résiduel (11) par rapport à la ligne électrique monophasée (6).

2. Dispositif de compensation selon l'une quelconque des revendications précédentes, dans lequel la direction du courant de compensation ($I_C$) est opposée à celle du courant de fuite capacitif ($I_{CD}$) pendant une partie substantielle d'une période fondamentale ($T_{CD}$) du courant de fuite capacitif ($I_{CD}$).

3. Dispositif de compensation selon l'une quelconque des revendications précédentes, dans lequel le dispositif de compensation (100) comprend des moyens d'entrée (22) conçus pour réguler la valeur quadratique moyenne du courant de compensation ($I_{CD}$) de manière à ce qu'elle soit sensiblement égale à la valeur quadratique moyenne du courant de fuite capacitif ($I_{CD}$).

4. Dispositif de compensation selon l'une quelconque des revendications précédentes, dans lequel le circuit de compensation (12) comprend une troisième borne (18) qui peut être connectée au conducteur de phase (1), le circuit de compensation (12) étant configuré pour utiliser la tension présente entre la troisième borne (18) et la première borne (13) pour générer le courant de compensation ($I_C$).

5. Dispositif de compensation selon l'une quelconque des revendications précédentes, dans lequel le circuit de compensation (12) comprend une troisième borne (18) qui peut être connectée au conducteur de phase (1) et une quatrième borne qui peut être connectée à un conducteur de protection du circuit (200), le circuit de compensation (12) étant configuré pour utiliser la tension présente entre la troisième borne (18) et la quatrième borne pour générer le courant de compensation (Ic).

6. Dispositif de compensation selon la revendication 4 ou 5, dans lequel le circuit de compensation (12) comprend :

- un générateur de tension (16) pour générer une tension de compensation (Ve) entre ses extrémités, et
- un réseau capacitif à deux bornes (17) connecté en série au générateur de tension (16),

le générateur de tension (16) est configuré pour générer la tension de compensation (Ve) de manière à ce qu'elle soit substantiellement proportionnelle, mais de signe opposé, à la tension entre le conducteur de phase (1) et le conducteur neutre (2) et/ou entre le conducteur de phase (1) et le conducteur de protection, afin de faire circuler le courant de compensation ($I_C$) dans le réseau capacitif à deux bornes (17).

7. Dispositif de compensation selon la revendication 6, dans lequel le réseau capacitif à deux bornes (17) est du type à capacité réglable.

8. Dispositif de compensation selon la revendication 6 ou 7, dans lequel le réseau capacitif à deux bornes (17) a une capacité (Cc) sensiblement égale à la capacité parasite équivalente du circuit (200).

9. Dispositif de compensation selon l'une des revendications 6 à 8, dans lequel le générateur de tension (16) est un transformateur, ayant de préférence une réponse en fréquence à large bande, dont l'enroulement primaire (19) est connecté par sa première extrémité à la troisième borne (18) et par sa deuxième extrémité au conducteur neutre (2), et dont l'enroulement secondaire (20) est connecté par sa première extrémité à la première borne (13) et par sa deuxième extrémité à une première extrémité du réseau capacitif à deux bornes (17), une deuxième extrémité du réseau capacitif à deux bornes (17) étant connectée à la deuxième borne (14) du circuit de compensation (12).

10. Dispositif de compensation selon l'une des revendications 6 à 8, dans lequel le générateur de tension (16) comprend :

   - un premier condensateur (CI) dont la première extrémité est connectée à la première borne (13) du circuit de compensation (12) et dont la deuxième extrémité est connectée à une première extrémité du réseau capacitif à deux bornes (17), une deuxième extrémité du réseau capacitif à deux bornes (17) étant connectée à la deuxième borne (14) du circuit de compensation (12), et
   - un deuxième condensateur (C2) dont la première extrémité est connectée à la troisième borne (18) du circuit de compensation (12) par l'intermédiaire d'un premier commutateur (S1) et dont la deuxième extrémité est connectée au réseau capacitif à deux bornes (17) par l'intermédiaire d'un deuxième commutateur (S2),

   la première extrémité du premier condensateur (CI) étant connectée à la première extrémité du deuxième condensateur (C2) par l'intermédiaire d'un troisième interrupteur (S3) et à la deuxième extrémité du deuxième condensateur (C2) par l'intermédiaire d'un quatrième interrupteur (S4), et la deuxième extrémité du premier condensateur (CI) étant connectée à la deuxième extrémité du deuxième condensateur (C2) par l'intermédiaire du deuxième interrupteur (S2), et dans lequel le dispositif de compensation (100) comprend une unité de commande (21) configurée pour actionner les interrupteurs (S1-S4) de manière à alterner une première période (TI), dans laquelle les interrupteurs (S1) et (S4) sont fermés et les interrupteurs (S2) et (S3) sont ouverts, avec une deuxième période (T2), dans laquelle les interrupteurs (S1) et (S4) sont ouverts et les interrupteurs (S2) et (S3) sont fermés.

11. Dispositif de compensation selon la revendication 10, dans lequel le dispositif de compensation (100) comprend une alimentation rapide CA/CC (23) pour générer une tension de sortie de courant continu capable d'alimenter l'unité de commande (21), dans laquelle le temps de stabilisation de la tension de sortie est inférieur à cinq millisecondes.

12. Système électrique monophasé comprenant : un circuit (200) qui comprend :

   - un conducteur de phase (1) et un conducteur neutre (2) connectés respectivement à un premier conducteur (3) et à un deuxième conducteur (4) d'une ligne électrique monophasée (6), le deuxième conducteur (4) de la ligne électrique monophasée (6) étant connecté à la terre,
   - une ou plusieurs charges (9) pouvant être alimentées en courant alternatif par la ligne électrique monophasée (6) via les conducteurs de phase et de neutre (2), les conducteurs de phase (1) et de neutre (2) et les charges (9) générant un courant de fuite capacitif ($I_{CD}$) vers la terre, et
   - un dispositif à courant résiduel (11) dont l'entrée est connectée à la ligne électrique monophasée (6) et dont la sortie est connectée aux conducteurs de phase et de neutre (1, 2), et un dispositif de compensation (100) selon l'une quelconque des revendications précédentes, le dispositif de compensation (100) étant connecté électriquement au conducteur neutre (2) et à un système de mise à la terre (10) via la première borne (13) et la deuxième borne (14), respectivement, le dispositif de compensation (100) étant connecté au circuit (200) en aval du dispositif à courant différentiel résiduel (11) par rapport à la ligne électrique monophasée (6).

13. Méthode de compensation d'un courant de fuite capacitif d'un circuit d'un système électrique monophasé, le circuit (200) comprenant :

   - un conducteur de phase (1) et un conducteur neutre (2) connectés respectivement à un premier conducteur (3) et à un deuxième conducteur (4) d'une ligne électrique monophasée (6), le deuxième conducteur (4) de la ligne électrique monophasée (6) étant connecté à la terre,
   - une ou plusieurs charges (9) pouvant être alimentées en courant alternatif par la ligne électrique monophasée (6) via les conducteurs de phase et de neutre (1, 2), les conducteurs de phase et de neutre (1, 2) et les charges (9) pouvant générer un courant de fuite capacitif ($I_{CD}$) vers la terre, et
   - un disjoncteur différentiel (11) dont l'entrée est connectée à la ligne électrique monophasée (6) et dont la sortie est connectée aux conducteurs de phase et de neutre (1, 2),

la méthode comprenant :

- en connectant une première borne (13) d'un dispositif de compensation (100) au conducteur neutre (2) et en connectant une deuxième borne (14) du dispositif de compensation (100) à un système de mise à la terre (10), le dispositif de compensation (100) étant connecté au circuit (200) en aval du dispositif à courant différentiel résiduel (11) par rapport à la ligne électrique monophasée (6), - en générant, au moyen du dispositif de compensation (100), un courant de compensation ($I_C$) de telle sorte qu'il circule alternativement du conducteur neutre (2) à la terre et vice versa à travers le système de mise à la terre (10), le courant de compensation ($I_C$) ayant une direction opposée à celle du courant de fuite capacitif ($I_{CD}$) et une intensité telle que la somme du courant de compensation ($I_C$) et du courant de fuite capacitif ($I_{CD}$) a une valeur inférieure à la valeur du courant de fuite capacitif ($I_{CD}$).

**FIG.1**

**FIG.2**

**FIG.3**

**FIG.4**

FIG.5

FIG.6

**FIG.7**

**FIG.8**

**FIG.9**

**FIG.10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03001641 A
- FR 2775847 A1
- DE 102014109978 A1